# EUROPEAN PATENT APPLICATION

(11) **EP 2 615 247 A2**
(43) Date of publication of application: **17.07.2013**
(21) Application number: 12191852.8
(22) Date of filing: 08.11.2012
(51) Int. Cl.: F01D 5/28

(54) **Creep resistant coating for ceramic turbine blades**

(30) Priority: 11.01.2012 US 201213348182
(71) Applicant: General Electric Company, Schenectady, New York 12345 (US)
(72) Inventor: Zhang, James, Greenville, SC South Carolina 29615 (US); Das, Rupak, Greenville, SC South Carolina 29615 (US); Delvaux, John McConnell, Greenville, SC South Carolina 29615 (US)
(74) Representative: Szary, Anne Catherine

(57) **Abstract**

A gas turbine blade (310) having a surface has a bond layer (320) applied to a first section of the surface, wherein the bond layer (320) is not applied to a second section of the surface. One or more protective layers (340, 350, 360, 370) may be applied such that the protective layers (340, 350, 360, 370) cover and overlap the bond layer (320) making direct contact with an area of the surface immediately outside the first section of the surface and forming a mechanical constraint geometry about the edge of the bond layer.

## Description

### TECHNICAL FIELD

The present disclosure relates to gas turbine blades and in particular to creep resistant coatings for gas turbine blades.

### BACKGROUND

Gas turbines, which may also be referred to as combustion turbines, are internal combustion engines that accelerate gases, forcing the gases into a combustion chamber where heat is added to increase the volume of the gases. The expanded gases are then directed towards a turbine to extract the energy generated by the expanded gases. Gas turbines have many practical applications, including use as jet engines and in industrial power generation systems.

The acceleration and directing of gases within a gas turbine are often accomplished using rotating blades. Extraction of energy is typically accomplished by forcing expanded gases from the combustion chamber towards turbine blades that are spun by the force of the expanded gases exiting the gas turbine through the turbine blades. Due to the high temperatures of the exiting gases, turbine blades must be constructed to endure extreme operating conditions. In many systems, complex turbine blade cooling systems are employed. While turbine blades are commonly constructed from metals, more advanced materials are now being used for such blades, such as ceramics and ceramic matrix composites. When using such advanced materials, coatings may be applied to provide added protection to the blades and increased heat resistance.

### BRIEF DESCRIPTION OF THE INVENTION

A gas turbine blade is disclosed that may include a surface and a first bond layer applied to a first section of the surface and not applied to a second section of the surface. One or more protective layers may be applied such that the protective layers cover and overlap the first bond layer making direct contact with an area of the surface immediately outside the first section of the surface and forming a mechanical constraint geometry about the edge of the first bond layer.

A method is disclosed for applying a first bond layer to a first section of a surface of a gas turbine blade, leaving a second section of the surface exposed. One or more protective layers may be applied such that the protective layers cover and overlap the first bond layer making direct contact with an area of the surface immediately outside the first section of the surface and forming a mechanical constraint geometry about an edge of the first bond layer.

The foregoing summary, as well as the following detailed description, is better understood when read in conjunction with the drawings. For the purpose of illustrating the claimed subject matter, there is shown in the drawings examples that illustrate various embodiments; however, the invention is not limited to the specific systems and methods disclosed.

### BRIEF DESCRIPTION OF THE DRAWINGS

These and other features, aspects, and advantages of the present subject matter will become better understood when the following detailed description is read with reference to the accompanying drawings, wherein:
Figure 1 is a non-limiting example of coatings applied to a blade surface.
Figure 2 is another non-limiting example of coatings applied to a blade surface and the creeping that may result.
Figure 3 is a non-limiting example of coatings applied to a blade surface such that a slanted edge is formed.
Figure 4 is another non-limiting example of coatings applied to a blade surface such that a slanted edge is formed, showing a viscous fluid layer that may form under certain conditions.
Figure 5 is a non-limiting example of coatings applied to a blade surface such that a straight edge is formed.
Figure 6 is another non-limiting example of coatings applied to a blade surface such that a straight edge is formed, showing a viscous fluid layer that may form under certain conditions.
Figure 7 is a non-limiting example of coatings applied to a blade surface such that a stepped edge is formed.
Figure 8 is another non-limiting example of coatings applied to a blade surface such that a stepped edge is formed, showing a viscous fluid layer that may form under certain conditions.
Figure 9 is a non-limiting example of a blade surface with no coatings applied.
Figure 10 is a non-limiting example of a blade surface with a bond layer applied.
Figure 11 is a non-limiting example of a blade surface with a bond layer applied and environmental barrier coating (EBC) layers applied.
Figure 12 is a non-limiting example of a blade surface with two bond layers applied and EBC layers applied.
Figure 13 is a non-limiting example of a blade surface with two bond layers applied and two EBC layers applied.
Figure 14 is a non-limiting example of a blade surface with two bond layers applied, two EBC layers applied, and a top layer applied.

### DETAILED DESCRIPTION OF THE INVENTION

In an embodiment, an environmental barrier coating (EBC) may be applied to gas turbine blade constructed from a ceramic matrix composite (CMC). An EBC may help protect the blade from the effects of environmental objects such as hot gas, water vapor and oxygen that may come in contact with the blade while a gas turbine is in operation. An EBC may be silicon-based, and it may be applied as several layers of various materials. In the embodiments of the present disclosure, the materials in each layer may be any material, and such materials may be applied using any means or methods, including Atmospheric Plasma Spray (APS), Chemical Vapor Deposition (CVD), Plasma enhanced CVD (PECVD), dip coating, reactive ion implantation, and electro-phoretic deposition (EPD).

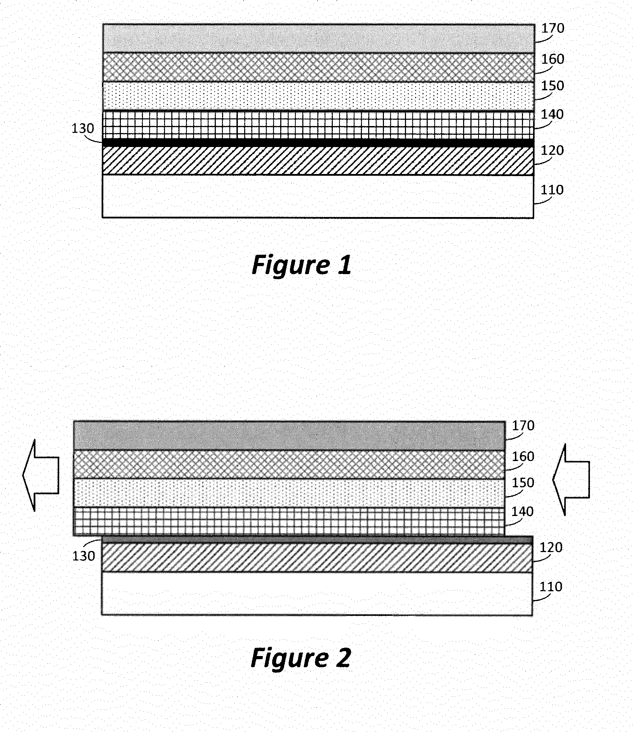

Figure 1 illustrates an example coating that may be applied to a CMC blade. Blade 110 may be coated with bond layer 120 that may serve as a bond coat and assist in bonding EBC layers to blade 110. In an embodiment, bond layer 120 may be a silicon bond coat. EBC layer 140 may be applied on bond layer 120. Additional EBC layers 150, 160, and 170 may further be applied over EBC layer 140. Any number of EBC layers may be applied to blade 110 and any other blade or surface disclosed herein, using any means and methods, and any material may be used for any blade, bond layer, and EBC layer disclosed herein, including bond layer 120, EBC layers 140, 150, 160, and 170 and for blade 110. All such embodiments are contemplated as within the scope of the present disclosure.

In the gas turbine environment in which blade 110 may be configured, hot gasses may cause bond layer 120 to oxidize and melt due to the elevated temperatures caused by such gases. Upon melting and oxidation, bond layer 120 may form viscous fluid layer 130, which in one embodiment may be composed of thermally grown oxide (TGO). As shown in Figure 2, viscous fluid layer 130 may move under the shear stress caused by the centrifugal load applied to blade 110 and the mismatch of co-efficient thermal expansion (CTE) with the outer EBC layers, such as layers 140, 150, 160, and 170. Such movement may be referred to as "creep". The creep of EBC layers 140, 150, 160, and 170 may limit the usable lifespan of blade 110, especially when cracking of any of layers 140, 150, 160, and 170 occurs.

To prevent or mitigate creep, in an embodiment the EBC layers may be applied such that a mechanical barrier is introduced that constrains the movement of a bond coat, such as bond layer 120, even when such a layer may form a viscous fluid layer (e.g., of TGO) upon melting and/or oxidation.

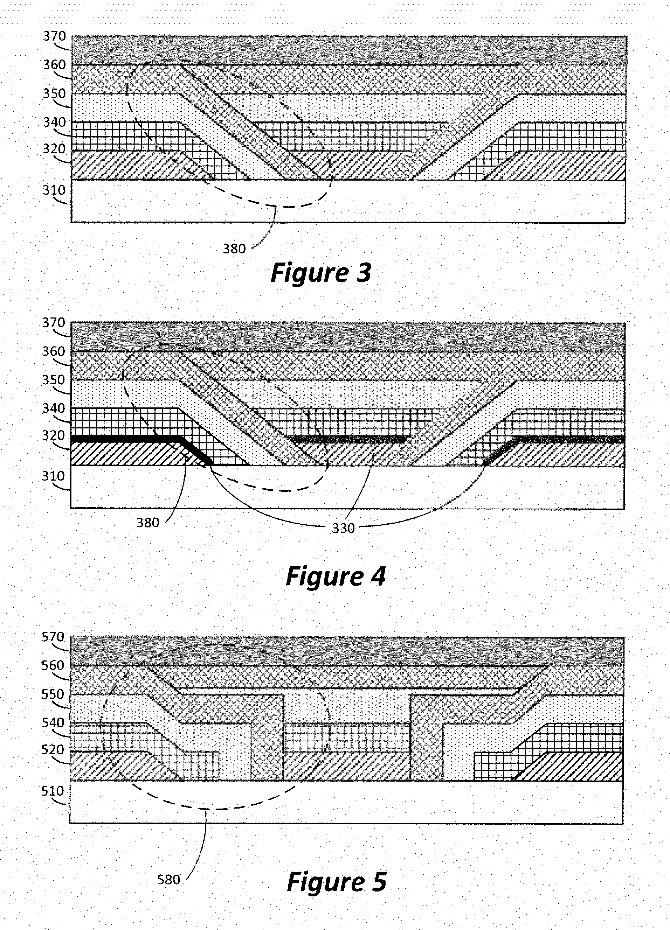

Figure 3 illustrates one embodiment of a layer structure that may mechanically constrain a bond coat and/or a viscous fluid layer formed at least partially thereby. In Figure 3, the EBC layers 340, 350, and 360 and bond layer 320 are applied to create slanted edge sections 380 (only one of two slanted edge sections is circled in Figure 3) that may mechanically constrain the bond coat and/or any viscous fluid layer. As can be seen in Figure 3, blade 310 is coated with bond layer 320 such that bond layer 320 does not completely cover the surface of blade 310. Rather, bond layer 320 covers portions of blade 310 while other portions are left uncovered by bond layer 320. Bond layer 320 may be applied so that the edges of bond layer 320 form a slanted edge as seen in Figure 3 in slanted edge sections 380.

EBC layer 340 may be applied over bond layer 320 and directly onto blade 310 beyond the edge of bond layer 320, forming a slanted edge over the slanted edge formed by bond layer 320, as seen in Figure 3 in slanted edge sections 380. EBC layer 350 may be applied over EBC layer 340 and directly onto blade 310 beyond the edge of EBC layer 340, forming a slanted edge over the slanted edge formed by EBC layer 340, as seen in Figure 3 in slanted edge sections 380. EBC layer 360 may be applied over EBC layer 350 in a similar fashion, and any additional EBC layers may be applied in a similar fashion. Final EBC layer 370 may be applied over all other layers without making any direct contact with blade 310 as shown in Figure 3.

The slanted edges created by EBC layers 340, 350, and 360 and the direct contact of these layers with blade 310 provide a mechanical constraint geometry that may effectively encapsulate bond layer 320 and thereby prevent and/or mitigate creep when a viscous fluid layer forms at bond layer 320. Figure 4 illustrates the embodiment of Figure 3 where viscous fluid layer 330 has formed between bond coat 320 and EBC layer 340 in response to oxidation and/or melting at bond layer 320. EBC layers 340, 350, and 360, being directly bonded to blade 310, prevent and/or mitigate any movement or creep of EBC layer 340 and the EBC layers above EBC layer 340. Since there is no bond coat at the contact area of EBC layers 340, 350, and 360 and blade 310, there may be no opportunity for a viscous fluid layer to develop at that area. Thus, EBC layers 340, 350, and 360 remain affixed to blade 310 at the point of contact with blade 310, thereby restraining any movement of the EBC layers due to viscous fluid layer 330.

Figure 5 illustrates another embodiment of a layer structure that may mechanically constrain a bond coat and/or a viscous fluid layer formed at least partially thereby. In Figure 5, bond layer 520 is applied to create a slanted edge at bond layer 520 and EBC layers 540, 550, and 560 are applied to create a straight edge as seen in straight edge sections 580 (only one of two straight edge sections is circled in Figure 5) that may mechanically constrain the bond coat and/or any viscous fluid layer. As can be seen in Figure 5, blade 510 is coated with bond layer 520 such that bond layer 520 does not completely cover the surface of blade 510. Rather, bond layer 520 covers portions of blade 510 while other portions are left uncovered by bond layer 520. Bond layer 520 may be applied so that the edges of bond layer 520 form a slanted edge as seen in Figure 5 in straight edge sections 580.

EBC layer 540 may be applied over bond layer 520 and directly onto blade 510 beyond the edge of bond layer 520 such that a vertically (in the perspective of Figure 5) straight edge is formed over the slanted edge formed by bond layer 520, as seen in Figure 5 in straight edge sections 580. EBC layer 550 may be applied over EBC layer 540 and directly onto blade 510 beyond the edge of EBC layer 540, forming another straight edge over the straight edge formed by EBC layer 540, as seen in Figure 5 in straight edge sections 580. EBC layer 560 may be applied over EBC layer 550 in a similar fashion, and any additional EBC layers may be applied in a similar fashion. Final EBC layer 570 may be applied over all other layers without making any direct contact with blade 510 as shown in Figure 5.

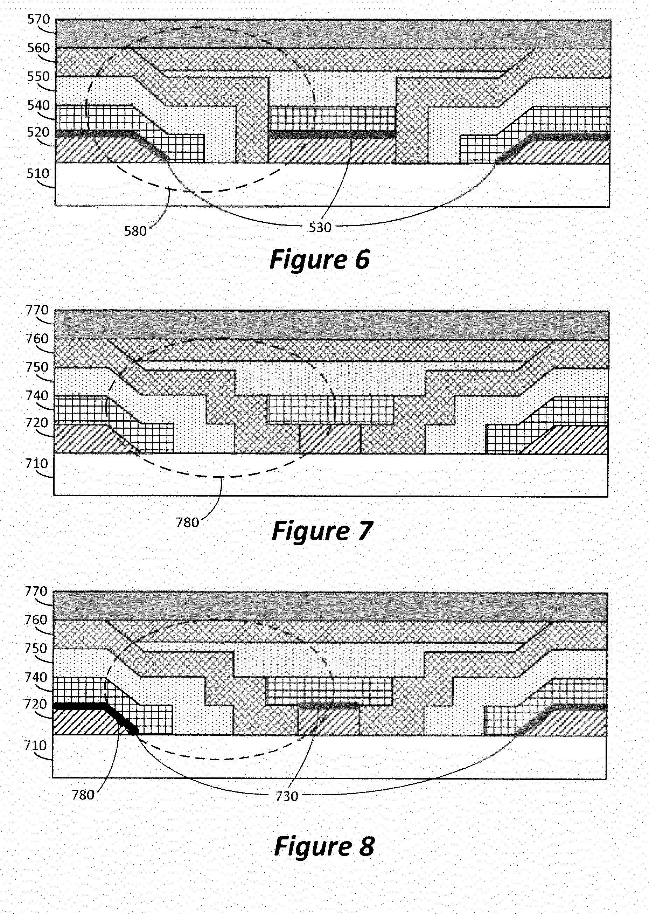

The straight edges created by EBC layers 540, 550, and 560 and the direct contact of these layers with blade 510 provide a mechanical constraint geometry that may effectively encapsulate bond layer 520 and thereby prevent and/or mitigate creep when a viscous fluid layer forms at bond layer 520. Figure 6 illustrates the embodiment of Figure 5 where viscous fluid layer 530 has formed between bond coat 520 and EBC layer 540 in response to oxidation and/or melting at bond layer 520. EBC layers 540, 550, and 560, being directly bonded to blade 510, prevent and/or mitigate any movement or creep of EBC layer 540 and the EBC layers above EBC layer 540. Since there is no bond coat at the contact area of EBC layers 540, 550, and 560 and blade 510, there may be no opportunity for a viscous fluid layer to develop at that area. Thus, EBC layers 540, 550, and 560 remain affixed to blade 510 at the point of contact with blade 510, thereby restraining any movement of the EBC layers due to viscous fluid layer 530.

Figure 7 illustrates yet another embodiment of a layer structure that may mechanically constrain a bond coat and/or a viscous fluid layer formed at least partially thereby. In Figure 7, bond layer 720 is applied to create a slanted edge at bond layer 720 and EBC layers 740, 750, and 760 are applied to create a stepped edge as seen in stepped edge sections 780 (only one of two stepped edge sections is circled in Figure 7) that may mechanically constrain the bond coat and/or any viscous fluid layer. As can be seen in Figure 7, blade 710 is coated with bond layer 720 such that bond layer 720 does not completely cover the surface of blade 710. Rather, bond layer 720 covers portions of blade 710 while other portions are left uncovered by bond layer 720. Bond layer 720 may be applied so that the edges of bond layer 720 form a slanted edge as seen in Figure 7 in stepped edge sections 780.

EBC layer 740 may be applied over bond layer 720 and directly onto blade 710 beyond the edge of bond layer 720 such that a single step stepped edge is formed over the slanted edge formed by bond layer 720, as seen in Figure 7 in stepped edge sections 780. EBC layer 750 may be applied over EBC layer 740 and directly onto blade 710 beyond the edge of EBC layer 740, forming another stepped edge having two steps over the stepped edge formed by EBC layer 740, as seen in Figure 7 in stepped edge sections 780. EBC layer 760 may be applied over EBC layer 750 in a similar fashion creating an additional step at that layer, and any additional EBC layers may be applied in a similar fashion. Final EBC layer 770 may be applied over all other layers without making any direct contact with blade 710 as shown in Figure 7.

The stepped edges created by EBC layers 740, 750, and 760 and the direct contact of these layers with blade 710 provide a mechanical constraint geometry that may effectively encapsulate bond layer 720 and thereby prevent and/or mitigate creep when a viscous fluid layer forms at bond layer 720. Figure 8 illustrates the embodiment of Figure 7 where viscous fluid layer 730 has formed between bond coat 720 and EBC layer 740 in response to oxidation and/or melting at bond layer 720. EBC layers 740, 750, and 760, being directly bonded to blade 710, prevent and/or mitigate any movement or creep of EBC layer 740 and the EBC layers above EBC layer 740. Since there is no bond coat at the contact area of EBC layers 740, 750, and 760 and blade 710, there may be no opportunity for a viscous fluid layer to develop at that area. Thus, EBC layers 740, 750, and 760 remain affixed to blade 710 at the point of contact with blade 710, thereby restraining any movement of the EBC layers due to viscous fluid layer 730.

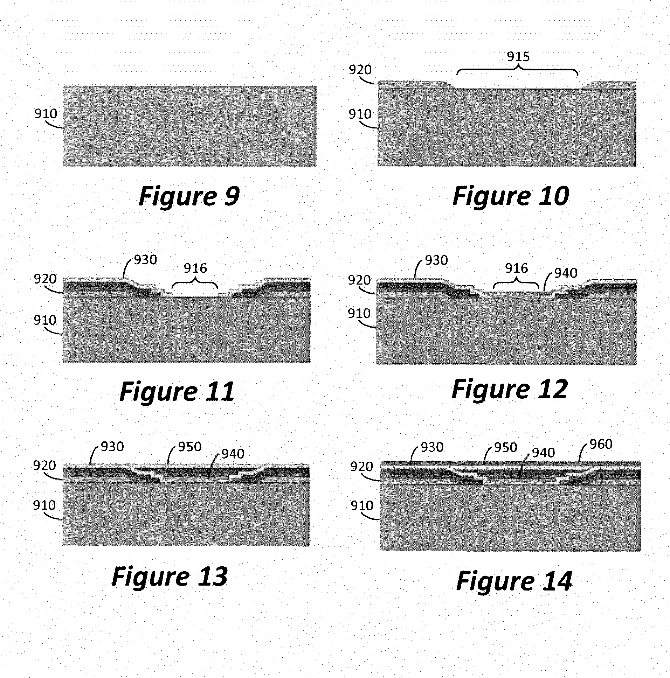

Figures 9-14 illustrate an embodiment of applying the various layers described herein to a blade that, in an embodiment, may be constructed of a ceramic matrix composite. The layers and coatings described in regard to Figures 9-14 may be applied using any means and methods, including Atmospheric Plasma Spray (APS), Chemical Vapor Deposition (CVD), Plasma enhanced CVD (PECVD), dip coating, and electro-phoretic deposition (EPD). The geometric shape of the various layers (e.g., slanted, straight, stepped) may be formed during the application process or after application using any means or methods to remove applied material to form the geometric shape, including any deposition methods, any masking method, using infra-red, laser incisions, chemical reactions, ion milling, reactive ion etching (RIE), sputtering, mechanical etching, chemical etching, and any combination of these means and methods.

In Figure 9, blade 910 is shown prior to the application of any of the layers. Note that blade 910 may be constructed entirely, or at least in part, of materials that are commonly used for gas turbine blades. Blade 910 may not be specially prepared in any way. For example, the surface of blade 910 need not be treated, machined, or otherwise physically altered in any way in many embodiments of the present disclosure.

As shown in Figure 10, the surface of blade 910 may coated with bond layer 920 in certain sections, leaving other sections, such as section 915, with no bond layer applied. As seen in Figure 11, other layers may be applied, such as EBC layers 930, over bond layer 920, such that the particular geometry desired is formed. For example, EBC layers 930 may be applied such that a slanted, straight, or stepped edge is formed in the area where EBC layers 930 encapsulate bond layer 920 and come into direct contact with the surface of blade 910. Upon application of EBC layers 930, sections of the surface of blade 910 may remain exposed, such as section 916.

As shown in Figure 12, second bond layer 940 may be applied to exposed sections on the surface of blade 910, such as section 916. All remaining exposed surface sections of blade 910 may be covered by second bond layer 940, and some sections that were previously covered by EBC layers 930 may also be covered by second bond layer 940. As seen in Figure 13, second EBC layers 950 may be applied to the sections of blade 910 that have not yet had EBC layers applied. Finally, as seen in Figure 14, top layer 960, that may include any type of coating, may applied over all surfaces of blade 910.

By using the embodiment contemplated herein, the geometry and microstructure of EBC layers may be modified to improve creep resistance using the same coating materials currently in use today. Thus the lifespan of blades used in gas turbines may be extended with little additional cost.

This written description uses examples to disclose the subject matter contained herein, including the best mode, and also to enable any person skilled in the art to practice the invention, including making and using any devices or systems and performing any incorporated methods. The patentable scope of this disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A gas turbine blade comprising:
a surface;
a first bond layer applied to a first section of the surface and not applied to a second section of the surface; and
a first protective layer applied such that the first protective layer covers and overlaps the first bond layer making direct contact with an area of the surface immediately outside the first section of the surface and forming a mechanical constraint geometry about an edge of the first bond layer.

2. The gas turbine blade of claim 1, further comprising at least one additional protective layer.

3. The gas turbine blade of claim 1 or claim 2, wherein the mechanical constraint geometry is one of a slanted geometry, a straight geometry, and a stepped geometry.

4. The gas turbine blade of any preceding claim, further comprising a second bond layer applied to the second section of the surface.

5. The gas turbine blade of claim 4, wherein the second bond layer is applied after the first protective layer is applied.

6. The gas turbine blade of claim 4 or claim 5, wherein the second bond layer overlaps the first protective layer.

7. The gas turbine blade of any preceding claim, further comprising a top layer applied to the first section and the second section of the surface.

8. The gas turbine blade of any preceding claim, wherein the mechanical constraint geometry formed by the first protective layer is formed by removing material from the first protective layer.

9. The gas turbine blade of any one of claims 1 to 7, wherein the mechanical constraint geometry formed by the first protective layer is formed as the first protective layer is applied to the surface.

10. The gas turbine blade of any preceding claim, wherein the gas turbine blade is constructed of a ceramic matrix composite.

11. A method comprising:
applying a first bond layer to a first section of a surface of a gas turbine blade leaving a second section of the surface exposed; and
applying a first protective layer such that the first protective layer covers and overlaps the first bond layer making direct contact with an area of the surface immediately outside the first section of the surface and forming a mechanical constraint geometry about an edge of the first bond layer.

12. The method of claim 11, further comprising applying at least one additional protective layer, wherein the at least one additional protective layer is directly applied to a second area of the surface immediately outside of the area of the surface covered by the first protective layer, and wherein the at least one additional protective layer forms a second mechanical constraint geometry about an edge of the first protective layer.

13. The method of claim 11 or claim 12, wherein the mechanical constraint geometry is one of a slanted geometry, a straight geometry, and a stepped geometry.

14. The method of any one of claims 11 to 13, further comprising applying a second bond layer to the second section of the surface.

15. The method of claim 14, wherein the second bond layer is applied after the first protective layer is applied.

16. The method of claim 14 or claim 15, wherein the second bond layer overlaps the first protective layer.

17. The method of any one of claims 11 to 16, further comprising applying a top layer to the first section and the second section of the surface.

18. The method of any one of claims 11 to 17, further comprising removing material from the first protective layer to form the mechanical constraint geometry.

19. The method of any one of claims 11 to 17, wherein the mechanical constraint geometry formed by the first protective layer is formed as the first protective layer is applied to the surface.
